Europäisches Patentamt

(19) European Patent Office

Office européen des brevets

(11) Publication number: **0 019 329**
**B1**

(12) **EUROPEAN PATENT SPECIFICATION**

(45) Date of publication of patent specification: 01.08.84

(51) Int. Cl.³: **G 11 B 7/24**

(21) Application number: 80200409.3

(22) Date of filing: 02.05.80

(54) Information recording element.

(30) Priority: 18.05.79 NL 7903915

(43) Date of publication of application:
26.11.80 Bulletin 80/24

(45) Publication of the grant of the patent:
01.08.84 Bulletin 84/31

(84) Designated Contracting States:
BE CH DE FR GB IT LI NL SE

(56) References cited:
DE - A - 2 346 923
DE - A - 2 826 122
GB - A - 2 005 155
GB - A - 2 005 457
NL - A - 7 503 977
NL - A - 7 804 651
NL - A - 7 901 448
US - A - 4 032 691

IBM TECHNICAL DISCLOSURE BULLETIN, vol.
14, no. 8, January 1972, page 2358 New York,
U.S.A. B.J. GREENBLOTT: "High-density
information recording by vaporization of film
areas"

(73) Proprietor: N.V. Philips' Gloeilampenfabrieken
Groenewoudseweg 1
NL-5621 BA Eindhoven (NL)

(72) Inventor: Heemskerk, Jacobus Petrus Josephus
c/o Int. OCTROOIBUREAU B.V. Prof. Holstlaan 6
NL-5656 AA Eindhoven (NL)
Inventor: Kivits, Petrus Johannes
c/o INT. OCTROOIBUREAU B.V. Prof. Holstlaan 6
NL-5656 AA Eindhoven (NL)

(74) Representative: Weening, Cornelis et al,
INTERNATIONAAL OCTROOIBUREAU B.V. Prof.
Holstlaan 6
NL-5656 AA Eindhoven (NL)

Courier Press, Leamington Spa, England.

## Description

The invention relates to an information recording element into which information can be written and read by means of laser light, comprising a substrate which is provided on at least one side with an anti-reflection coating as hereinafter defined into which information bits can be written by means of laser light which has been modulated in accordance with the information to be recorded. The anti-reflection coating comprises a reflecting layer which reflects the relevant laser light, an absorbing layer which absorbs the relevant laser light and a transparent layer which is transparent to the relevant laser light provided between the two layers.

At recording the laser light is modulated so that the intensity of the laser light varies between a value which is sufficiently high to produce a physical change in the absorbing layer of the information recording element, which results in that the conditions for anti-reflection are no longer satisfied, and a value which is too low to produce this effect. The information recording element is read by means of laser light of a sufficiently low intensity so that no physical changes are produced in the absorbing layer.

Information recording elements of the above-mentioned type are disclosed in the German Patent Application 27 57 737 (US Application 782032, March 28, 1977; Netherlands Patent Application 7713230).

The known information recording elements are assembled from a substrate (for example, made of glass) onto which a reflecting layer has been provided (for example, consisting of aluminium). A transparent silicon dioxide layer is provided on the reflecting layer, on top of which an absorbing layer is applied. This absorbing layer may consist of a dye or a metal. If it consists of a dye, the optical density of the dye is locally changed during writing of the information. If, on the contrary, the absorbing layer consists of metal, cavities are burned therein. The reflecting layer, the transparent layer and the absorbing layer together form the anti-reflection coating whereby these three layers are brought into agreement with one another as regards thickness and nature of the material so that the anti-reflection conditions are satisfied. At recording the laserlight will not be reflected. Substantially all the laserlight energy is absorbed in the absorbing layer of the anti-reflex coating.

The invention has for its object to provide a further improvement of the known information recording elements. The recording element according to the invention is more sensitive than the above-described known elements as measures have been taken which ensure that the energy applied during writing of information is not only absorbed as completely as possible in the absorbing layer of the anti-reflex coating, but that it also remains concentrated as much as possible in the area where a physical or chemical change must be produced in the absorbing layer. This means that information can be written in the information recording element with a lower intensity of the laser light (or, when the same intensity is used, at a higher speed).

The invention is based on the recognition of the fact that an appreciable portion of the energy applied on writing information by means of the laser light is discharged *via* the transparent layer by means of heat conduction. This discharged portion of the energy is then no longer available to effect a physical or chemical change in the absorbing layer. Should the transparent layer now be produced from a material which conducts the heat to a lesser extent, a greater portion of the totally applied energy of the laser light is utilized to effect the desired physical change. In contrast to the description in the German Patent Application 28 12 868 it appeared unnecessary to take measures to effect a rapid heat discharge in the transparent layer to prevent the transparent layer and the reflecting layer from being damaged.

More particularly the invention relates to an information recording element as described in the preamble which is characterized in that the transparent layer contains an organic compound having a coefficient of thermal conductivity at room temperature of less than 0.7 W/m°K and being transparent for the relevant laser-light.

Generally, organic compounds have a thermal conductivity which is approximately 10 times less than that of the silicon dioxide used so far. A suitable organic compound is a polymeric compound such as PVC, polyesters, polyethers, poly-olefines. Particularly useful are light cured lacquers such as solvent free lacquers based upon acrylates. Examples of light curable lacquers can be found in Neth. Pat. Appl. Nr. 7611395 (PHN 8576) in the same of Applicant. The organic compounds may be deposited by means of spinning, sputtering, CVD (chemical vapour deposition) etc. The majority of polymers are deposited by means of spinning. Alternatively, organic dyes which are transparent to the applied laser light can succesfully be used as the organic compound. Organic dyes can usually be deposited by means of vapour-deposition. When diode laser light (800—870 nm) is used, satisfactory results are obtained when vapour-deposited phthalic cyanine $(C_{32}H_{18}N_8)$ or setocyanine arc used as the transparent intermediate layer.

The information recording element is read in reflection. On reading, the conditions for anti-reflection will no longer be satisfied in those areas where physical or chemical changes in the absorbing layer have been produced, so that reflection of the incident laser light occurs. This reflected laser light is detected. Prior to the present invention the absorbing layer has always been provided as far as possible from the substrate, that is to say, the reflecting layer of the anti-reflex coating has always been provided so that it is in contact with the substrate. A particularly suitable embodiment is, however, obtained when the absorbing layer of the anti-reflex coating is provided as close as possible to the substrate. The information recording element must then be read—in reflection—via the substrate. The substrate must then, of course, be transparent to the laser light used. The fact that satisfactory results are obtained with this embodiment—also when the absorbing layer is made of metal—is in itself surprising. One can expect that the removal of metal, when a hole is made mechanically in an absorbing layer, would cause difficulties as the absorbing layer is enclosed between the substrate and the transparent layer. However, no noticeable difficulties are met in practice. This embodiment has the advantage that external damages of the information recording element lie outside the focal distance of the objective which focusses the laser light on the absorbing layer. The invention and its advantages will now be further explained with reference to the accompanying drawing wherein

Fig. 1 is a schematic cross-sectional view of an information recording element according to the invention and

Fig. 2 is a schematic cross-sectional view of a modified embodiment of an information recording element according to the invention.

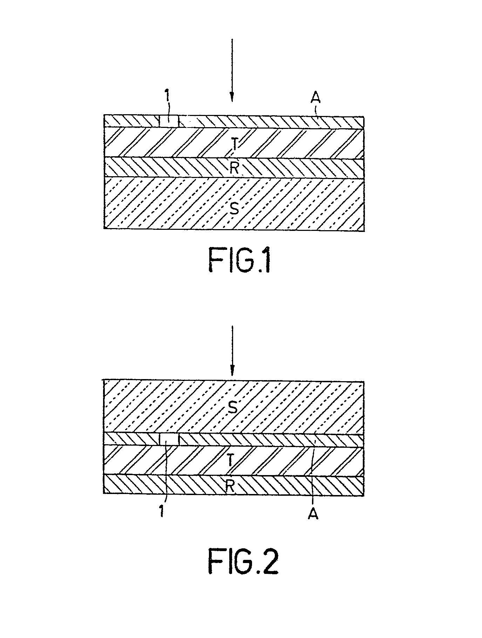

Referring to Fig. 1, there is shown an information recording element according to the invention into which information has already been entered. S denotes the substrate. The anti-reflex coating comprises a reflecting layer R, a transparent layer T and an absorbing layer A. Reference numeral 1 denotes a physical change, namely a hole, provided in the absorbing layer. For completeness it should once again be noted that transparency, reflection and absorption are understood to mean that these properties apply to the wavelength of the laser light used. It is possible to use materials which do not have, or hardly have, the said properties for radiation of a different wavelength. The substrate S may be produced from various kinds of materials: such as glass, synthetic resin materials etc. The substrate may be transparent; for the embodiment shown in Fig. 1 this is not imperative.

The reflecting layer R is provided on the substrate S. R may consist of a metal, such as aluminium, and silver. These metals can be easily deposited on the substrate by means of vapour-deposition. It is, alternatively, possible to use a substrate S which is self reflective; the reflective layer R may then coincide with the substrate S. A multi-layer or single-layer dielectric reflector may alternatively be used for layer R.

Thereafter, the transparent layer T is provided on layer R. Layer T is made of an organic material. Suitable organic materials are polymeric materials, such as, polyvinylchloride, polyester of ethylene glycol and terephthalic acid (Mylar), polytetrafluorethylene (Teflon) poly-p-xylylene (Parylene), cellulose and many more. The majority of polymeric materials must be provided in the form of a solution on layer R, whereafter the solvent must be evaporated. This mode of depositing the layer may sometimes be troublesome. Light curable lacquers are applied by a spinning, dipping or similar technique and subsequently cured to a solid polymer by irradiation with f.e. ultraviolet light. Teflon can be applied by means of sputtering and Parylene by thermal dissociation of the dimer and condensation and polymerisation of the formed radicals on the substrate. It is, alternatively, possible to use a dye which is transparent to the laser light used, as the organic material. The use of an organic dye has the advantage that mostly it can be applied by means of an easy vapour deposition process. Even if the dye decomposes during vapour deposition an organic deposit suitable for the invention can sometimes be obtained. This applies particularly to the vapour deposition of Sudan black, Suitable dyes are, for example setocyanine, Sudan black and particularly phthalic cyanine.

The absorbing layer A is applied on top of layer T. Layer A may consist of a thin metal layer such as a bismuth-titanium or rhodium layer. Quite suitable are thin layers of Cd or Zn, such as, a 5 nm. thick layer of Zn. The metals Zn and Cd have low melting points and, furthermore, are corrosion resistant at room temperature, it is also possible to use a layer of a dye, such as a vanadyl phthalic cyanine layer.

The layers R, T and A must be correlated with one another so that the conditions for anti-reflections are satisfied. Namely, when laser light is incident on the absorbing layer A from the direction indicated in Fig. 1 by means of an arrow, a portion of the light is reflected, a portion is absorbed and another portion is transmitted. The transmitted portion reflects from the reflecting layer R and is then partly absorbed by layer A and is partly transmitted to the outside through layer A. The latter portion—the portion transmitted to the outside—may partly extinguish the portion incident on and reflected from layer A, when both portions are in antiphase. This partial extinction will occur when the thickness of the transparent layer T is chosen in dependence on the reflective indices of the material used in the layers R, T and A, so that the phase difference between the beam incident on and reflected from A and the beam reflected from and transmitted to the outside via R is equal to an odd number of times $\pi$. Neglecting corrections for phase jumps on reflection from A and R and neglecting the finite thickness of A, the thickness of the intermediate layer is then equal to $\frac{1}{4}\lambda(2n+1)$, wherein $\lambda$ is equal to the wavelength of the laser light in the medium and n is an integer greater than or equal to zero. In view of prevailing thermal losses *via* the reflecting layer, the layer thickness is preferably chosen to be sufficiently thick (by the choice of n) so that no heat can diffuse from the absorbing layer to the reflecting layer during the radiation period. The condition for anti-reflection are known *per se*. For an explanation with reference to an information recording element reference is made to A. E. Bell and F. W. Spong, Anti reflection Structures for Optical Recording, IEEE Journal of Quantum Electronics, vol. QE 14, No. 7, July 1978, pages 487—495.

Fig. 2 shows a second embodiment of the information recording element according to the invention. The letters and the numeral 1 in Fig. 2 have the same meanings as in Fig. 1. In this embodiment the substrate must be transparent as writing and reading *via* the substrate is effected by means of laser light coming from the direction indicated by means of an arrow. On writing and reading information, the laser light is focussed on the absorbing layer A which is enclosed, in this embodiment, in the interior of the information recording element, and protected from damage thus. Any damage in the free surface area of the substrate does not produce any disturbance as the free surface area is outside the depth of the field of focus of the objective for the focussing of the laser light. The embodiment shown in Fig. 1 may easily result in damage to layer A, which results in disturbances.

The use of the information recording element according to the invention will now be further explained with reference to Fig. 1.

A beam of laser light, indicated by the arrow, is directed to the information recording element. The intensity of the beam is modulated in accordance with the information to be recorded, between a value which is sufficiently high to burn a hole (1) in layer A and a value which is not sufficiently high for burning. The laser beam is moved relative to the information recording element and/or *vice versa*. Thus, a pattern of holes (1) or other physical or chemical changes are produced in layer A, only one of these changes being shown in the drawing. On reading, laser light of a lower intensity is used so that then no further holes can be produced in layer A. When the laser light is incident on a hole (1), reflection is produced, no or hardly any reflection being produced when the laser light lands beside a hole. The reflected radiation is detected and processed further.

In addition to the above-mentioned layers the recording element according to the invention may comprise still further layers, such as protective layers etc.

Example I:

A reflecting aluminium layer was vapour-deposited (50 nm thick) on a 1 mm thick glass substrate. A 140 nm thick polymer layer of poly-p-xylylene (coefficient of thermal conductivity at room temperature 0.2 W/m°K) was provided on the aluminium by thermal dissociation.

An absorbing layer of Bi, 8 nm thick, was vapour deposited on the polymer layer. In the element thus obtained a hole could be burned in the absorbing layer by means of a diode laser (wavelength 820 nm) with an energy of 6 mW during 50 ns. When a 140 nm thick $SiO_2$ layer was used (instead of the polymer layer) an energy of 20 mW was required.

Example II:

A layer of vanadyl phthalic cyanine (26 nm thick) was vacuum deposited as an absorbing layer on a substrate. Thereafter, a layer of cellulose (300 nm) (coefficient of thermal conductivity at room temperature less than 0.25 W/m°K) was applied by means of spinning. Finally, an aluminium reflecting layer was vacuum-deposited on the cellulose. *Via* the substrate physical/chemical changes were produced in the absorbing layer by means of a crypton laser ($\lambda$=672 nm) at an energy of 20 mW in 100 ns so that the radiated areas no longer satisfied the conditions for anti-reflections.

## Claims

1. An information recording element wherein information can be written and read by means of laser light comprising a substrate(s), provided on at least one side with an anti-reflection coating, wherein information bits (1) can be written by means of laser light which has been modulated in accordance with the information to be recorded, the coating comprising a reflecting layer (R) which reflects the relevant laser light, an absorbing layer (A) which absorbs the relevant laser light and a transparent layer (T) provided between these two layers, which is transparent to the relevant laser light, characterized in that the transparent layer (T) comprises an organic compound having a coefficient of thermal conductivity at room temperature of less than 0.7 W/m°K and being transparent for the relevant laser light.

2. An information recording element as claimed in Claim 1, characterized in that the organic compound is a polymeric compound.

3. An information recording element as claimed in Claim 1, characterized in that the organic compound is an organic dye.

4. An information recording element as claimed in Claim 1, 2 or 3, characterized in that the element comprises a transparent substrate which on one side is provided with subsequently the absorbing layer (A) the transparent layer (T) and as top layer the reflective layer (R).

## Patentansprüche

1. Informationsaufzeichnungselement, in das mit Laserlicht Information eingeschrieben und ausgelesen werden kann, mit einem Substrat(s), das an wenigstens einer Seite mit einer Antireflexionsschicht versehen ist, worin mit Hilfe von Laserlicht Informationsbits (1) eingeschrieben werden können, welches Licht entsprechend der aufzunehmenden Information moduliert ist, wobei die genannte Schicht eine das betreffende Laserlicht reflektierende Schicht (R), eine das betreffende Laserlicht absorbierende Schicht (A) und eine zwischen diesen zwei Schichten liegende, für das betreffende Laserlicht transparente Schicht (T) enthält, dadurch gekennzeichnet, dass die transparente Schicht (T) eine organische Verbindung enthält mit einem Wärmeleitungskoeffizienten bei Zimmertemperatur kleiner als 0,7 W/m°K.

2. Informationsaufzeichnungselement nach Anspruch 1, dadurch gekennzeichnet, dass die organische Verbindung eine polymere Verbindung ist.

3. Informationsaufzeichnungselement nach Anspruch 1, dadurch gekennzeichnet, dass die organische Verbindung ein organischer Farbstoff ist.

4. Informationsaufzeichnungselement nach Anspruch 1, 2 oder 3, dadurch gekennzeichnet, dass das Element ein transparentes Substrat enthält, das auf einer Seite mit im wesentlichen der Absorptionssicht (A), der transparenten Schicht (T) und als Abdeckschicht der Reflexionsschicht (R) versehen ist.

**Revendications**

1. Elément d'enregistrement d'informations dans lequel de l'information peut être enregistrée et lue à l'aide de lumière laser, comportant un substrat dont au moins une face est munie d'un recouvrement anti-réflecteur, dans lequel des bits d'information (1) peuvent être enregistrés à l'aide de lumière laser, qui a été démodulée en concordance avec l'information à enregistrer, le recouvrement comportant une couche réflectrice (R), qui assure la réflexion de la lumière laser en question, une couche absorbante (A), qui absorbe la lumière laser en question et une couche transparente (T) appliquée entre ces deux couches, qui est transparente à la lumière laser en question, caractérisé en ce que la couche transparente (T) comporte un composé organique présentant un coefficient de conductivité thermique à la température ambiante normale inférieur à 0,7 W/mK et étant transparent à la lumière laser en question.

2. Elément d'enregistrement d'informations selon la revendication 1, caractérisé en ce que le composé organique est un composé polymère.

3. Elément d'enregistrement d'informations selon la revendication 1, caractérisé en ce que le composé organique est un colorant organique.

4. Elément d'enregistrement d'informations selon la revendication 1, 2 ou 3, caractérisé en ce que l'élément comporte un substrat transparent, dont une face est munie successivement d'une couche absorbante (A), de la couche transparente (T) et comme couche supérieure la couche réflectrice (R).

FIG.1

FIG.2